# EUROPÄISCHE PATENTSCHRIFT

(11) **EP 0 908 504 B1**
(45) Veröffentlichungstag und Bekanntmachung des Hinweises auf die Patenterteilung: **21.05.2003**
(21) Anmeldenummer: 97116917.2
(22) Anmeldetag: 30.09.1997
(51) Int. Cl.: C09K 21/06, C09K 21/02

(54) **Feuerhemmendes Mittel**
Fire retardant
Agent ignifuge

(43) Veröffentlichungstag der Anmeldung: 14.04.1999
(73) Patentinhaber: BITA GmBH., 5929 Ahlen (DE)
(72) Erfinder: Feige, Wolfgang, 99192 Neudietendorf (DE); Feige, Albrecht, 99192 Ingersleben (DE); Kästner, Peter, 99310 Sülzenbrücken (DE)

(56) Entgegenhaltungen:
- DD-A- 293 620
- DE-A- 4 305 419
- DE-A- 19 506 717
- DE-A- 19 530 894
- DE-U- 29 601 505
- DE-U- 29 601 506
- US-A- 4 243 419

## Beschreibung

Die Erfindung betrifft ein biologisches feuerhemmendes Mittel für Dämmstoffe wie Holzspäne, Schafwoll-, Baumwoll- und Flachsvlies, Dacheindeckungen aus Stroh, Schilfrohr oder ähnlichem Material.

Feuerhemmende Beschichtungs-, Anstrichs- und Imprägnierstoffe sind hinreichend bekannt.
So ist beispielsweise aus der DE Offenlegungsschrift 37 22 359 eine flammhemmende Beschichtungszusammensetzung zur Erzeugung eines im wesentlichen kontinuierlichen Filmes auf der Oberfläche normalerweise brennbarer Materialien bekannt, die aus einer wässrigen Dispersion CaCO 8 bis 16 Gew.-%, ALO ..., Ammoniak..., Kaliumtripolyphosphat 0,1 bis 0,3 Gew.-%... und Farbpigmente 0 bis 5 Gew.-% besteht. Weiterhin wird in der DE Offenlegungsschrift 19 506 717 ein Verfahren zur Herstellung einer feuerfesten lösungsmittelfreien und schadstoffarmen Isolierfarbe beschrieben, nach dem Dispersionsfarbe nach DIN 53778 SM mit einem Mineralpulver z.B. Wärmespeicherpulver vermischt und auf verschiedene Untergründe wie z.B. Stein, Putz, Beton, Holz, Gipskarton, Stahl, Kupfer usw. aufgestrichen wird.
Auch ist aus der DE Offenlegungsschrift 43 05 419 ein flüssiges feuerhemmendes und feuerlöschendes Mittel insbesondere zum Löschen von durch Materialien der Klasse A und B und leicht entzündlichen organischen Lösungsmitteln verursachtem Feuer bekannt. Es besteht aus einem wässrigen Extrakt von Pflanzenasche und mindestens einer Pflanze, ausgewählt aus der Gruppe Sapindaceae, Compositae, Cruciferae, Leguminosae, Wurzelrinde von Ulmaceae, Phytolaccaceae und Baumwollsamen sowie mindestens einem Tesid in einer Menge von 30 bis 60 Gew.-%, bezogen auf das Gewicht des genannten Extraktes von Pflanzenasche und der genannten Pflanzen.
Die zuvor beschriebenen feuerhemmenden Mittel bzw. feuerfesten Anstrichstoffe sind mit chemischen Zusätzen versehen, die beim Erhitzen zu Schadstoffausscheidungen neigen und die Umwelt belasten. Ihre Entsorgung bzw. die der bei der Berührung mit Feuer entstehenden Rückstände ist nicht ganz problemlos. Außerdem ist in der DE Patentanmeldung, Akz.: 19727998.8, "Schilfrohrdach", bereits vorgeschlagen worden, die oberste Schicht von Dacheindeckungen aus Stroh, Schilfrohr usw. für Wohnhäuser mit einem vorzugsweise biologischen Mittel wie "Thüringer Waid" bis zu einer Tiefe von ca. 5 bis 6 cm zu imprägnieren. Das auf das Schilfrohr aufgesprühte und auskristallisierte Schutzmittel übt eine brandeindämmende Wirkung aus. Zur weiteren Unterstützung der feuerhemmenden Wirkung sind zusätzliche Besprüh- und Zerstäubungseinrichtungen vorgesehen.

Die Aufgabe der Erfindung besteht in der Schaffung eines weiteren feuerhemmenden Mittels, dessen Grundbestandteile biologische Stoffe ohne chemische Zusätze sind, das einfach zu handhaben und ökologisch unbedenklich einsetzbar ist, keine gesundheitsschädlichen Wirkungen bei Mensch und Tier hervorruft und das desinfizierend, insektizid, fungizid, geruchsmindernd und problemlos großtechnisch einsetzbar ist.

Erfindungsgemäß wird die Aufgabe durch die kennzeichnenden Merkmale der Ansprüche 1 bis 4 gelöst.

Die Erfindung soll nachstehend an einem Ausführungsbeispiel näher erläutert werden.
Das erfindungsgemäße feuerhemmende Mittel besteht aus vergorenem Waidsaft, ungelöschtem Kalk, mineralischen Pigmenten, Rosmarinöl und bei Bedarf aus Zusätzen von Pottasche oder Soda.
In einer Mischvorrichtung befindet sich vergorener Waidsaft, der in bekannter Weise aus Bestandteilen der Waidpflanze gewonnen worden ist. In einem zügigen Rührvorgang werden 90 Vol.-% Waidsaft schrittweise im Kaltverfahren 1 bis 10 Vol.-% ungelöschter Kalk, jeweils nach vollzogener Untermischung 0 bis 2 Vol.-% mineralische Pigmente und zur Erzielung kosmetischer bzw. Farbeffekte 0,01 bis 0,05 Vol.-% Rosmarinöl zur Erzielung eines angenehmen Geruchs- und Desinfektionseffektes beigegeben. Zur Erzielung eines kosmetischen Effektes können je nach Anwendung Zusätze von Pottasche oder Soda erfolgen. Nach Abschluß des Mischvorganges entsteht eine feuerhemmende Flüssigkeit mit fungizider und insektizider Wirkung.
Diese Flüssigkeit wird durch Streichen, Versprühen, Tauchen usw. auf Dämmstoffe wie Holzspäne, Schafwoll-, Baumwoll- und Flachsvlies oder Dacheindeckungsmaterial wie Stroh, Schilfrohr oder ähnliches aufgebracht. Sie dringt in die Poren oder andere Hohlräume dieser Stoffe ein und imprägniert diese. Die Trocknung erfolgt vorteilhaft im Freien. Die im Waidsaft enthaltenen insektizid und fungizid wirkenden Stoffe verhindern außerdem Pilz- und Algenbefall. Die feuerhemmende Wirkung entsteht durch Fernhalten des für einen Verbrennungsvorgang erforderlichen Sauerstoffs mittels Oxydationshibitoren durch beispielsweise quartäre und tertiäre Ammoniakverbindungen. Somit sind die mit der erfindungsgemäßen Flüssigkeit imprägnierten Stoffe schwer bzw. nicht entflammbar, also nicht brennbar.

Die Behandlung von Dacheindeck- oder Dämmbauelementen kann vorab industriell im großen Stil erfolgen, z.B. in großen Sprüh- und Tauchanlagen. Auf fertiggestellte Dacheindekkungen wird die erfindungsgemäße Flüssigkeit abschnittsweise von Hand mittels einer Sprühvorrichtung so lange aufgebracht, bis eine durchgehende Durchfeuchtung der gesamten oberen Schicht bis zu einer Tiefe von 5 bis 6 cm erreicht worden ist.

## Patentansprüche

1. Feuerhemmendes Mittel mit Komponenten pflanzlicher Stoffe, **dadurch gekennzeichnet, daß** vergorener Waidsaft, ungelöschter Kalk, mineralische Pigmente und Rosmarinöl im Kaltverfahren miteinander vermischt sind.

2. Feuerhemmendes Mittel nach Anspruch 1, **dadurch gekennzeichnet, daß** das Gemisch aus 90 Vol.-% vergorenem Waidsaft, 1 bis 10 Vol.-% ungelöschtem Kalk, 0 bis 2 Vol.-% mineralischen Pigmenten und 0,01 bis 0,05 Vol.-% Rosmarinöl besteht.

3. Feuerhemmendes Mittel nach Anspruch 1 bis 2, **dadurch gekennzeichnet, daß** dem Gemisch Pottasche zugesetzt ist.

4. Feuerhemmendes Mittel nach Anspruch 1 bis 3, **dadurch gekennzeichnet, daß** dem Gemisch Soda zugesetzt ist.

## Claims

1. Fire retardant containing components of vegetable material **characterized in that** fermented woad juice, unslaked lime, mineral pigments and oil of rosemary are mixed together in cold process.

2. Fire retardant of claim (1) **characterized in that** the mixture is composed of 90 % by volume of fermented woad juice, 1 to 10 % by volume of unslaked lime, 0 to 2 % by volume of mineral pigment, and 0.01 to 0.05 % by volume of oil of rosemary.

3. Fire retardant of claims (1) to (2) **characterized in that** potash is added to the mixture.

4. Fire retardant of claims (1) to (3) **characterized in that** soda is added to the mixture.

## Revendications

1. Agent ignifuge avec composants de matières végétales **caractérisé par le fait que** le jus de guède (pastel) fermenté, le calcium non dissous, des pigments minéraux et de l'huile de romarin soient mélangés au cours d'un procédé à froid.

2. Agent ignifuge selon la revendication 1 caractérisée en cela, par le fait que le mélange se compose de 90% de jus de guède fermenté, de 1 à 10 % volumique de calcium non-dissous, de 0 à 2 % de pigments minéraux et de 0,01 à 0,05% volumique d'huile de romarin.

3. Agent ignifuge selon les revendications 1 à 2 caractérisées en cela par l'apport d'un mélange de carbonate de potassium.

4. Agent ignifuge selon les revendications 1 à 3 caractérisées en cela par l'apport d'un mélange de soude.
